# NEW EUROPEAN PATENT SPECIFICATION

(11) **EP 1 395 129 B2**
(45) Date of publication and mention of the opposition decision: **07.10.2009**
(45) Mention of the grant of the patent: 24.05.2006
(21) Application number: 02733188.3
(22) Date of filing: 21.05.2002
(51) Int. Cl.: A23L 1/0532, A23L 1/09, A23G 3/00, A23D 7/00, A23D 7/015

(54) **EDIBLE SPREAD**
ESSBARER BROTAUFSTRICH
PATE A TARTINER COMESTIBLE

(30) Priority: 21.05.2001 IE 20010488
(43) Date of publication of application: 10.03.2004
(73) Proprietor: Kerry Group Services International Limited, Tralee Co. Kerry (IE)
(72) Inventor: MCLOUGHLIN, Seamus, Tralee, Co. Kerry (IE); LEAN, Brenda, Tralee, Co. Kerry (IE); DOYLE, Liam, Listowel, Co. Kerry (IE); KELLEHER, Norma, Tralee, Co. Kerry (IE)
(74) Representative: Duffy, Assumpta Dympna
(86) International application number: PCT/IE2002/000066
(87) International publication number: WO 2002/094037

(56) References cited:
- EP-A- 0 509 707
- EP-A- 0 596 546
- EP-A- 0 605 217
- US- - 5 527 556
- US- - 6 071 548
- IQS MR. RUDY WOUTERS: '"The use of inulin as fat replacer in dairy products..."' 08 March 2000, BARCELONA,

## Description

This invention relates to a food product, in particular an edible spread.

An acceptable edible spread should have a number of characteristics. It should be capable of being spread at domestic refrigerator temperatures and at room temperature without releasing oil or moisture or breaking apart. It should release its flavour in the mouth but should also retain a smooth structure when spread. The spread must also be stable at room temperature and have an adequate shelf life. All of these characteristics have not so far been achieved in edible spreads, in particular sweetened oil-in-water emulsion spreads.

EP-A-0 509 707 discloses edible spreads which may include up to 40% fat and flavouring agents.

It is therefore an object of the invention to provide an improved edible spread which has good spread characteristics and organoleptic properties.

According to the invention there is provided an edible spread in the form of an oil-in-water emulsion comprising:
from 10% to 40% by weight of a primary flavouring agent selected from chocolate;
from 7% to 25% by weight of a water-soluble vegetable fibre;
from 1% to 5% by weight of milk protein or a source thereof;
from 0.1% to 3% by weight of a stabiliser; and
from 20% to 60% by weight of water.

The primary flavouring agent comprises chocolate, such as milk chocolate, dark (plain) chocolate, white chocolate or hazelnut chocolate. The primary flavouring agent is preferably present in an amount of from 10% to 30%, more preferably from 15% to 28%, especially approximately 25% by weight of the spread.

In a particularly preferred embodiment of the invention, the water-soluble vegetable fibre comprises inulin. The water-soluble vegetable fibre is preferably present in an amount of from 10% to 15%, especially approximately 12% by weight of the spread.

The milk protein preferably comprises a non-fermented milk protein, such as, for example, skim milk powder, whey powder, whey protein concentrate, caseinates, soy protein and mixtures thereof. Skim milk powder is particularly preferred. The milk protein or source thereof is preferably present in an amount of from 1.5% to 3.5%, especially approximately 2% by weight of the spread.

The stabiliser preferably comprises a stabiliser that will gel in the presence of milk protein. The stabiliser may be any suitable stabiliser and is preferably selected from gelatine, alginate, carrageenan, pectin, agar agar and mixtures thereof. The stabiliser is preferably present in an amount of from 0.5% to 2.5%, especially approximately 1% by weight of the spread.

The spread of the invention comprises water in an amount of from 20% to 60%, preferably from 40% to 55%, especially approximately 50% by weight of the spread.

The spread may also include one or more sweetening agents in an amount up to 20% by weight of the spread, depending on the sweetening agent(s). Suitable sweetening agents include sugar, corn syrup, fructose, glucose, and artificial sweeteners, such as aspartame.

The spread may include further optional ingredients, such as one or more secondary flavouring agents, colouring agents, acidity regulators (e.g. lactic acid), preservatives (e.g. potassium sorbate) and the like.

The spread of the invention may be formed by heating the water to a temperature in the region of 80°C-90°C. The remaining ingredients are added to the hot water under high shear agitation and dissolved therein and the mixture is pasteurised for at least 15 seconds, conveniently 30-60 seconds at about 72°C. The oil-in-water emulsion thus formed is then rapidly cooled, preferably using a scraped surface heat exchanger, from a temperature in the range of 40°C-80°C, preferably 50°C-70°C, to a temperature in the range of 2°C-25°C, preferably 5°C-15°C, over a period ranging from one second to five minutes, preferably ranging from 1 to 5 seconds.

The invention will be more clearly understood from the following description thereof given by way of example only.

In the following Examples, the water was heated to 85°C and the remaining ingredients were added thereto under high shear agitation and were dissolved in the water. The resulting mixture was pasteurised for approximately 30 seconds at about 72°C. The oil-in-water emulsion formed was rapidly cooled over a period of 1-5 seconds from a temperature of about 65°C to a temperature of about 10°C, by passing it through a scraped surface heat exchanger. All percentages are by weight of the spread. Examples 6, 8 and 9 are not part of the invention.

### EXAMPLE 1

| Ingredients | % |
|---|---|
| Water | 49.943 |
| Skim milk powder | 2.0 |
| Milk Chocolate | 25.0 |
| Inulin | 12.0 |
| Sugar | 7.5 |
| Cocoa powder | 2.0 |
| Gelatine | 1.0 |
| Potassium sorbate | 0.25 |
| Lactic acid | 0.3 |
| Flavouring (Firmenech 504.867/T) | 0.007 |

| Example No. | | 2 | 3 | 4 | 5 | 6 | 7 | 8 | 9 |
|---|---|---|---|---|---|---|---|---|---|
| Water | (%) | 52.342 | 49.774 | 55.22 | 46.1 | 35.6 | 45.88 | 31.7 | 28.3 |
| Butter | (%) | - | - | - | - | 3 | - | 4 | - |
| Skimmed Milk Powder | (%) | 2.2 | 2.0 | 1.5 | 2.0 | 3 | 2.5 | 2 | 2 |
| Cream Powder | (%) | - | - | - | 6.0 | 1 | - | - | 4 |
| Milk Chocolate | (%) | 23.0 | 26.0 | 15.0 | - | - | - | - | - |
| White Chocolate | (%) | - | - | - | 21.0 | - | - | - | - |
| Dark Chocolate | (%) | - | - | - | - | - | 28 | - | - |
| Hazelnut paste | (%) | - | - | 10.0 | - | - | - | - | - |
| Inulin | (%) | 13.5 | 11.0 | 10.0 | 14.5 | 14.0 | 13 | 16 | 17 |
| Caramel | (%) | - | - | - | - | 40.0 | - | - | - |
| Sugar | (%) | 7.0 | 8.0 | 7.5 | 8.5 | 2.0 | 7 | 10 | 12 |
| | | | | | | | | | |
| Cocoa Powder | (%) | 1.0 | 2.0 | - | - | - | 2.5 | - | - |
| | | | | | | | | | |
| Sodium Alginate | (%) | 0.4 | - | - | - | - | 0.3 | - | - |
| | | | | | | | | | |
| Pectin | (%) | - | 0.7 | - | - | - | 0.2 | 0.9 | 0.4 |
| | | | | | | | | | |
| Carrageenan | (%) | - | - | 0.3 | - | - | - | - | - |
| | | | | | | | | | |
| Gelatine | (%) | - | - | - | 1.2 | 1.0 | - | - | 0.7 |
| | | | | | | | | | |
| Potassium Sorbate | (%) | 0.2 | 0.2 | 0.2 | 0.2 | 0.2 | 0.2 | 0.2 | 0.2 |
| | | | | | | | | | |
| Strawberry puree | (%) | - | - | - | - | - | - | 35 | - |
| Raspberry puree | (%) | - | - | - | - | - | - | - | 35 |
| | | | | | | | | | |
| Lactic Acid | (%) | 0.35 | 0.32 | 0.27 | 0.4 | 0.2 | 0.39 | | |
| Citric Acid | (%) | | | | | | | 0.2 | 0.4 |
| Flavouring | (%) | 0.008 Danisco 25273 | 0.006 Danisco 25273 | 0.01 Danisco 3433 | 0.1 Danisco 3433 | - | 0.03 Firmenech 504.867/T | - | - |

The above Examples yielded smooth stable spreads with excellent melt in the mouth properties at 30°C, which were spreadable from the refrigerator and melted to a liquid when heated.

The invention is not limited to the embodiments and examples described herein which may be modified or varied without departing from the scope of the invention.

## Claims

1. An edible spread in the form of an oil-in-water emulsion comprising:
from 10% to 40% by weight of a primary flavouring agent selected from chocolate;
from 7% to 25% by weight of a water-soluble vegetable fibre;
from 1% to 5% by weight of milk protein or a source thereof;
from 0.1% to 3% by weight of a stabiliser; and
from 20% to 60% by weight of water.

2. An edible spread according to claim 1, wherein the primary flavouring agent is present in an amount of from 10% to 30%, preferably 15% to 28%, and more preferably approximately 25%, by weight of the spread.

3. An edible spread according to any preceding claim, wherein the water-soluble vegetable fibre comprises inulin.

4. An edible spread according to any preceding claim, wherein the water-soluble vegetable fibre is present in an amount of from 10% to 15%, preferably approximately 12%, by weight of the spread.

5. An edible spread according to any preceding claim, wherein the milk protein comprises a non-fermented milk protein.

6. An edible spread according to claim 5, wherein the non-fermented milk protein is selected from skim milk powder, whey powder, whey protein concentrate, caseinates, soy protein and mixtures thereof.

7. An edible spread according to any preceding claim, wherein the milk protein or source thereof is present in an amount of from 1.5% to 3.5%, preferably approximately 2%, by weight of the spread.

8. An edible spread according to any preceding claim, wherein the stabiliser comprises a stabiliser that will gel in the presence of milk protein.

9. An edible spread according to claim 8, wherein the stabiliser is selected from gelatine, alginate, carrageenan, pectin, agar agar and mixtures thereof.

10. An edible spread according to any preceding claim, wherein the stabiliser is present in an amount of from 0.5% to 2.5%, preferably approximately 1%, by weight of the spread.

11. An edible spread according to any preceding claim, additionally comprising a sweetening agent in an amount of up to 20% by weight of the spread, the sweetening agent preferably being selected from sugar, corn syrup, fructose, glucose and artificial sweeteners or any combination thereof.

12. A process for preparing an edible spread according to any preceding claim, which comprises heating the water to a temperature in the range of from 80°C to 90°C and dissolving the remaining ingredients therein, thereby forming an oil-in-water emulsion.

13. A process according to claim 12, wherein the oil-in-water emulsion formed is rapidly cooled to a temperature in the range of from 2°C to 25°C, preferably 5°C to 15°C.

14. A process according to claim 12 or 13, wherein the oil-in-water emulsion is pasteurised prior to cooling.

## Patentansprüche

1. Essbarer Aufstrich in der Form einer Öl-in-Wasser-Emulsion, umfassend:
von 10 Gew.-% bis 40 Gew.-% eines primären Geschmacksstoffs, der aus Schokolade ausgewählt ist;
von 7 Gew.-% bis 25 Gew.-% einer wasserlöslichen Gemüsefaser;
von 1 Gew.-% bis 5 Gew.-% Milchprotein oder eine Quelle davon;
von 0,1 Gew.-% bis 3 Gew.-% eines Stabilisators; und
von 20 Gew.-% bis 60 Gew.-% Wasser.

2. Essbarer Aufstrich nach Anspruch 1, worin der primäre Geschmacksstoff in einer Menge von 10 Gew.-% bis 30 Gew.-%, bevorzugt 15 Gew.-% bis 28 Gew.-% und bevorzugter ca. 25 Gew.-% des Aufstrichs vorliegt.

3. Essbarer Aufstrich nach einem der vorangehenden Ansprüche, worin die wasserlösliche Gemüsefaser Inulin umfasst.

4. Essbarer Aufstrich nach einem der vorangehenden Ansprüche, worin die wasserlösliche Gemüsefaser in einer Menge von 10 Gew.-% bis 15 Gew.-%, bevorzugt ca. 12 Gew.-% des Aufstrichs vorliegt.

5. Essbarer Aufstrich nach einem der vorangehenden Ansprüche, worin das Milchprotein ein nicht fermentiertes Milchprotein umfasst.

6. Essbarer Aufstrich nach Anspruch 5, worin das nicht fermentierte Milchprotein aus Magermilchpulver, Molkenpulver, Molkenprotein-Konzentrat, Kaseinaten, Sojaprotein und Gemischen davon ausgewählt ist.

7. Essbarer Aufstrich nach einem der vorangehenden Ansprüche, worin das Milchprotein oder die Quelle davon in einer Menge von 1,5 Gew.-% bis 3,5 Gew.-%, bevorzugt ca. 2 Gew.-% des Aufstrichs vorliegt.

8. Essbarer Aufstrich nach einem der vorangehenden Ansprüche, worin der Stabilisator einen Stabilisator umfasst, der in Anwesenheit von Milchprotein geliert.

9. Essbarer Aufstrich nach Anspruch 8, worin der Stabilisator aus Gelatine, Alginat, Carrageenan, Pektin, Agar-Agar und Gemischen davon ausgewählt ist.

10. Essbarer Aufstrich nach einem der vorangehenden Ansprüche, worin der Stabilisator in einer Menge von 0,5 Gew.-% bis 2,5 Gew.-%, bevorzugt ca. 1 Gew.-% des Aufstrichs vorliegt.

11. Essbarer Aufstrich nach einem der vorangehenden Ansprüche, der zusätzlich ein Süßmittel in einer Menge von bis zu 20 Gew.-% des Aufstrichs umfasst, wobei das Süßmittel bevorzugt aus Zucker, Maissirup, Fruktose, Glukose und künstlichen Süßstoffen oder jedweder Kombination davon ausgewählt ist.

12. Verfahren zur Herstellung eines essbaren Aufstrichs nach einem der vorangehenden Ansprüche, das Folgendes umfasst: Erhitzen des Wassers auf eine Temperatur im Bereich von 80 °C bis 90 °C und Auflösen der übrigen Bestandteile darin, wodurch eine Öl-in-Wasser-Emulsion gebildet wird.

13. Verfahren nach Anspruch 12, worin die gebildete Öl-in-Wasser-Emulsion rasch auf eine Temperatur im Bereich von 2 °C bis 25 °C, bevorzugt 5 °C bis 15 °C abgekühlt wird.

14. Verfahren nach Anspruch 12 oder 13, worin die Öl-in-Wasser-Emulsion vor dem Abkühlen pasteurisiert wird.

## Revendications

1. Pâte à tartiner comestible sous la forme d'une émulsion huile dans l'eau comprenant :
de 10 % à 40 % en poids d'un agent aromatisant principal choisi parmi le chocolat ;
de 7 % à 25 % en poids d'une fibre végétale soluble dans l'eau ;
de 1 % à 5 % en poids d'une protéine du lait ou d'une source de cette protéine ;
de 0,1 % à 3 % en poids d'un agent stabilisant ; et
de 20 % à 60 % en poids d'eau.

2. Pâte à tartiner comestible selon la revendication 1, dans laquelle l'agent aromatisant principal est présent en une quantité allant de 10 % à 30 %, de préférence de 15 % à 28 %, et plus préférablement d'approximativement 25 %, en poids de la pâte à tartiner.

3. Pâte à tartiner comestible selon l'une quelconque des revendications précédentes, dans laquelle la fibre végétale soluble dans l'eau se compose de l'inuline.

4. Pâte à tartiner comestible selon l'une quelconque des revendications précédentes, dans laquelle la fibre végétale soluble dans l'eau est présente en une quantité allant de 10 % à 15 %, de préférence d'approximativement 12 %, en poids de la pâte à tartiner.

5. Pâte à tartiner comestible selon l'une quelconque des revendications précédentes, dans laquelle la protéine du lait se compose d'une protéine de lait non fermenté.

6. Pâte à tartiner comestible selon la revendication 5, dans laquelle la protéine de lait non fermenté est choisie parmi le lait écrémé en poudre, le lactosérum en poudre, le concentré protéique de lactosérum, les caséinates, une protéine du soja et les mélanges de ces protéines.

7. Pâte à tartiner comestible selon l'une quelconque des revendications précédentes, dans laquelle la protéine du lait ou la source de cette protéine est présente en une quantité allant de 1,5 % à 3,5 %, de préférence d'approximativement 2 %, en poids de la pâte à tartiner.

8. Pâte à tartiner comestible selon l'une quelconque des revendications précédentes, dans laquelle l'agent stabilisant se compose d'un agent stabilisant qui gèlera en présence de la protéine du lait.

9. Pâte à tartiner comestible selon la revendication 8, dans laquelle l'agent stabilisant est choisi parmi la gélatine, l'alginate, la carraghénine, la pectine, l'agar-agar et les mélanges de ces agents stabilisants.

10. Pâte à tartiner comestible selon l'une quelconque des revendications précédentes, dans laquelle l'agent stabilisant est présent en une quantité allant de 0,5 % à 2,5 %, de préférence d'approximativement 1 %, en poids de la pâte à tartiner.

11. Pâte à tartiner comestible selon l'une quelconque des revendications précédentes, comprenant en outre un agent édulcorant en une quantité allant jusqu'à 20 % en poids de la pâte à tartiner, l'agent édulcorant étant choisi de préférence parmi le sucre, le sirop de glucose, le fructose, le glucose et les agents édulcorants artificiels ou toute combinaison de ces agents édulcorants.

12. Procédé de préparation d'une pâte à tartiner comestible selon l'une quelconque des revendications précédentes, qui comprend le chauffage de l'eau jusqu'à une température comprise dans la plage allant de 80°C à 90°C et la dissolution des ingrédients restants dans celle-ci, formant de cette façon une émulsion huile dans l'eau.

13. Procédé selon la revendication 12, dans lequel l'émulsion huile dans l'eau formée est refroidie rapidement jusqu'à une température comprise dans la plage allant de 2°C à 25°C, de préférence de 5°C à 15°C.

14. Procédé selon la revendication 12 ou 13, dans lequel l'émulsion huile dans l'eau est pasteurisée avant le refroidissement.
